# EUROPÄISCHE PATENTSCHRIFT

(11) **EP 1 675 701 B1**
(45) Veröffentlichungstag und Bekanntmachung des Hinweises auf die Patenterteilung: **22.10.2014**
(21) Anmeldenummer: 04765475.1
(22) Anmeldetag: 22.09.2004
(51) Int. Cl.: B23K 26/10

(54) **VERFAHREN UND VORRICHTUNG ZUM LASERSTRAHLBEARBEITEN, INSBESONDERE LASERSTRAHLSCHWEISSEN VON BAUTEILEN**
METHOD AND DEVICE FOR LASER BEAM MACHINING, IN PARTICULAR LASER BEAM WELDING
PROCEDE ET DISPOSITIF D'USINAGE AU LASER, EN PARTICULIER DE SOUDAGE AU LASER DE COMPOSANTS

(30) Priorität: 24.09.2003 DE 10344526
(43) Veröffentlichungstag der Anmeldung: 05.07.2006
(73) Patentinhaber: KUKA Systems GmbH, 86165 Augsburg (DE)
(72) Erfinder: RIPPL, Peter, 86163 Augsburg (DE); ENGLHARD, Anton, 86574 Petersdorf/Schönleiten (DE); EBERL, Martin, 82347 Bernried (DE)
(74) Vertreter: Ernicke, Klaus Stefan
(86) Internationale Anmeldenummer: PCT/EP2004/010603
(87) Internationale Veröffentlichungsnummer: WO 2005/030427

(56) Entgegenhaltungen:
- EP-A2- 0 870 571
- FR-A- 2 663 583
- US-A- 4 626 999

## Beschreibung

Die Erfindung betrifft ein Verfahren zum Laserstrahlbearbeiten, insbesondere Laserstrahlschweißen, von Bauteilen, insbesondere Karosseriebauteilen, mit den Merkmalen im Oberbegriff des Hauptanspruchs, und eine Vorrichtung zur Durchführung des Verfahrens.

Aus der Praxis ist es bekannt, zum Laserstrahlschweißen einen Remote-Laserkopf ohne Bauteilberührung mittels eines mehrachsigen Manipulators entlang der zu schweißenden Bahn führen. Der Manipulator hat mehrere Grundachsen und eine Hand mit mehreren Handachsen. Hierbei wird der Einstrahlwinkel β am Bauteil weitgehend konstant gehalten. Dies wird erreicht durch eine gleichzeitige und einander überlagernde Bewegung aller Manipulatorachsen, wobei die massebehafteten Grundachsen in hohem Maße beteiligt sind. Problematisch ist hierbei der Umstand, dass beim Schweißen kurzer Nahtabschnitte der Roboter durch die aus Taktzeitgründen erforderlichen hohen Geschwindigkeiten kurze abgehackte Bewegungen ausführen muss. Dies bringt ihn an die Grenze einer mechanischen Überlastung. Außerdem können die vom Laserschweißprozess her potenziell möglichen Schweißgeschwindigkeiten häufig nicht voll ausgenützt werden, was zu Taktzeitverlusten und zu entsprechenden zeitlichen und anlagentechnischen Problemen führen kann.

Ferner ist aus der Praxis bekannt, mit Remote-Laserköpfen zu arbeiten, die eine integrierte Scanneroptik mit mehreren beweglichen Spiegeln zur Ablenkung des Laserstrahls besitzen (siehe EP-A-0 870 571). Die Scanneroptiken sind allerdings relativ teuer und erfordern einen zusätzlichen Bau- und Steuerungsaufwand.

Es ist Aufgabe der vorliegenden Erfindung, die Laserstrahlschweißtechnik zu verbessern.

Die Erfindung löst diese Aufgabe mit den Merkmalen im Verfahrenshauptanspruch 1, sowie in Vorrichtungsanspruch 14. Das erfindungsgemäße Verfahren hat den Vorteil, dass es mit konventionellen Manipulatoren und Laserköpfen ausgeführt werden kann. Der an der Manipulatorhand extern montierte Laserkopf kann bei Bedarf gegen ein anderes Werkzeug getauscht werden. Ein Laserkopf kann andererseits in Verbindung mit verschiedenen Manipulatoren benutzt werden.

Der Laserstrahl wird durch Orientierungsänderungen und Änderungen seines Auslenkwinkels α entlang der zu verfolgenden Schweißbahn bewegt. Dies kann allein durch die Bewegung der vorzugsweise drei oder mehr Handachsen des Manipulators geschehen. Die anderen Manipulatorachsen oder Grundachsen können während des Schweißprozesses in Ruhe sein oder allenfalls einen Höhenausgleich in Laserstrahlrichtung durch Nachführen der Manipulatorhand bewirken.

Die Laserstrahlführung durch eine reine Handachsenbewegung hat steuerungstechnische und wirtschaftliche Vorteile. Einerseits können vorhandene Achsen des Manipulators und insbesondere Roboters benutzt werden, wobei Zusatzachsen am oder im Laserkopf entbehrlich sind. Dies entlastet und vereinfacht die Robotersteuerung. Auch der Programmieraufwand wird wesentlich verringert. Ein vorhandener Manipulator oder Roboter in Standardausführung kann benutzt werden, so wie er ist. Eine spezielle gerätetechnische Anpassung ist mit Ausnahme eines evtl. Auslegers nicht erforderlich. Der Verzicht auf Zusatzachsen zur Laserstrahlablenkung vereinfacht und verbilligt ferner den Laserkopf.

Über die Schwenkbewegungen der Manipulatorhand kann der Laserstrahl sehr schnell und zielgenau bewegt werden. Bei den Handbewegungen brauchen auch keine großen Massen bewegt zu werden. Außerdem kann mit konventionellen und preisgünstigen Remote-Laserstrahlköpfen mit winkelstarrer Optik und fester Brennweite gearbeitet werden.

Das erfindungsgemäße Verfahren bietet verschiedene Vorteile. Einerseits kann durch die schnellen Laserstrahlbewegungen per Orientierungsänderung die maximal mögliche Schweißgeschwindigkeit am Bauteil erreicht und weitgehend eingehalten werden. Mit dem beanspruchten Verfahren können in der gleichen Taktzeit mehr Schweißnähte als mit der konventionellen Laserstrahlschweißtechnik erzeugt werden. Dies ermöglicht einerseits eine Taktzeitverkürzung, falls dies gewünscht wird. Andererseits kann eine bessere Ausnutzung der Taktzeit zu erheblichen technischen und wirtschaftlichen Einsparungen führen. Für die Schaffung der gleichen Zahl von Schweißnähten an ein oder mehreren Bauteilen, z.B. an einer Fahrzeugrohkarosserie, genügen durch die bessere Auslastung weniger Laserschweißeinrichtungen, insbesondere Schweißroboter. Dies vereinfacht und verbilligt andererseits die System- und Anlagentechnik. Speziell im Bereich von Framing- bzw. Geostationen und Ausschweißstationen im Karosserierohbau führt dies zu nachhaltigen Entlastungen. Entsprechende Vorteile ergeben sich bei anderen Laserbearbeitungsverfahren mit einem Manipulator oder Roboter, z.B. beim Laserschneiden.

Der eingesetzte Manipulator kann von beliebig geeigneter Bauart sein und im einfachsten Fall ein stationäres Gestell mit einer mehrachsigen Manipulatorhand darstellen. In der bevorzugten Ausführungsform hat der Manipulator ein oder mehrere translatorische und/oder rotatorische Achsen. Insbesondere ist der Manipulator mit seiner Hand vorteilhafterweise als mehrachsiger Industrieroboter, insbesondere als Gelenkarmroboter mit sechs oder mehr Achsen ausgebildet. Solche Gelenkarmroboter werden in der Industrie, insbesondere im Karosseriebau, in hoher Zahl eingesetzt.

Die Roboterhand hat hierbei vorzugsweise drei einander in einem Kreuzungspunkt schneidende Handachsen IV,V,VI. Dies ermöglicht die Bewegung eines vorzugsweise quer zur letzten Handachse VI ausgerichteten Laserstrahl in einer Schalenbahn um den Kreuzungspunkt. Wenn der emittierte Laserstrahl eines vorzugsweise extern an der Roboterhand befestigten Remote-Laserkopfes den Kreuzungspunkt ebenfalls schneidet, bewegt sich der Fokus des Laserstrahl auf einer Kugelschale um diesen Kreuzungspunkt. Dies ermöglicht eine besonders einfache, schnelle und genaue Laserstrahlbewegung.

Je nach Orientierungsänderung bzw. Auslenkwinkel α und entsprechender Länge der Schweißnaht können Höhenabweichungen des Fokus gegenüber dem Bauteil auftreten. Bei Einsatz von Remote-Laserköpfen mit langer Brennweite von z.B. 500 mm bis 1500 mm kann diese Höhenabweichung im Toleranzbereich liegen und akzeptabel sein. Wenn höherer Genauigkeiten gefordert werden, kann auch eine Fokusnachführung während des Schweißvorgangs stattfinden, was auf unterschiedliche Weise möglich ist, z.B. durch ein Verfahren der Fokussieroptik oder eine sog. adaptive Fokussieroptik oder durch eine Nachführbewegung des Manipulators oder Roboters in Strahlrichtung.

Der Remote-Laserkopf kann direkt an der Roboterhand befestigt werden. In vielen Fällen ist jedoch die Zwischenschaltung eines Auslegers günstig. Der Ausleger vergrößert den "Hebelarm" des Laserstrahls bzw. den Abstand des Kreuzungspunktes der Handachsen vom Bauteil. Je größer dieser Abstand oder die Brennweite des Laserkopfes sind, desto größer ist der Arbeitsbereich und die erzielbare Nahtlänge unter Einhaltung akzeptabler Einstrahlwinkel β. Ein Ausleger ermöglicht ferner den Einsatz von Remote-Laserköpfen mit kürzerer Brennweite bei trotzdem großen Arbeitsbereichen.

Beim erfindungsgemäßen Verfahren ist es vorteilhaft, beim Schweißen die Laserleistung in Abhängigkeit von den Orientierungsänderungen oder Einstrahlwinkeln β des Laserstrahls (2) nachzuführen. Hierdurch kann der Laserschweißprozess optimiert werden.

Mit der erfindungsgemäßen Verfahrenstechnik können beliebige Nahtformen (Stumpfnaht, Überlappnaht, Kehlnaht etc.) mittels Laserstrahl geschweißt werden. Die Schweißnähte können als durchgehende längere Schweißnähte oder als kürzere Schweißnahtabschnitte, z.B. in Form einer Steppnaht, gebildet werden. Durch den großen Arbeitsbereich der Laserschweißvorrichtung können auch die Versatzbewegungen zwischen den Schweißnähten oder Nahtabschnitten durch eine Handbewegung bei stehendem Manipulator durchgeführt werden. Bei Überschreitung des Arbeitsbereichs kann die Versatzbewegung durch eine Manipulatorbewegung unterstützt oder bewirkt werden.

In den Unteransprüchen sind weitere vorteilhafte Ausgestaltungen der Erfindung angebeben.

Die Erfindung ist in den Zeichnungen beispielsweise und schematisch dargestellt. Im Einzelnen zeigen:
- Figur 1:: eine Seitenansicht einer Laserschweißstation mit einer robotergeführten Laserschweißvorrichtung und einem Bauteil,
- Figur 2:: eine vergrößerte Darstellung der Roboterhand mit einem Ausleger und einem Remote-Laserkopf und
- Figur 3:: eine vereinfachte Schemadarstellung eines Schweißprozesses mit mehreren Schweißnähten an einem Bauteil.

Die Erfindung betrifft ein Verfahren zum Laserbearbeiten, insbesondere Laserstrahlschweißen von Bauteilen (14), die von beliebiger Zahl, Art und Größe sein können. In der bevorzugten Ausführungsform handelt es sich um Karosseriebauteile von Fahrzeugen und ggf. auch um komplette Rohkarosserien.

Die Erfindung betrifft ferner eine Laserschweißvorrichtung (1) bzw. eine hiermit ausgestatte Laserschweißstation (2) zum Fügen von Bauteilen (14) mittels Laserstrahlschweißen. Hierbei kann es sich z.B. um eine Geostation oder Framingstation innerhalb einer Fertigungsanlage für Rohkarosserien handeln, in der Karosserieteile, z.B. Bodenteil und Seitenwände etc., in die geometrisch richtige Position zueinander gebracht, in dieser Lage gespannt und mittels ein oder mehreren Laserschweißnähten (19) gefügt werden. Die Laserschweißstation (2) kann außerdem eine Bauteilvorbereitungsstation sein, in der z.B. eine Seitenwandgruppe aus mehreren Einzelteilen nacheinander aufgebaut und durch Laserstrahlschweißen gefügt wird. Die übrigen Komponenten der Laserschweißstation (2) sind der Übersicht halber nicht dargestellt. Die Laserschweißstation kann auch zwei oder mehr der nachfolgend näher beschriebenen Laserschweißvorrichtungen (1) aufweisen.

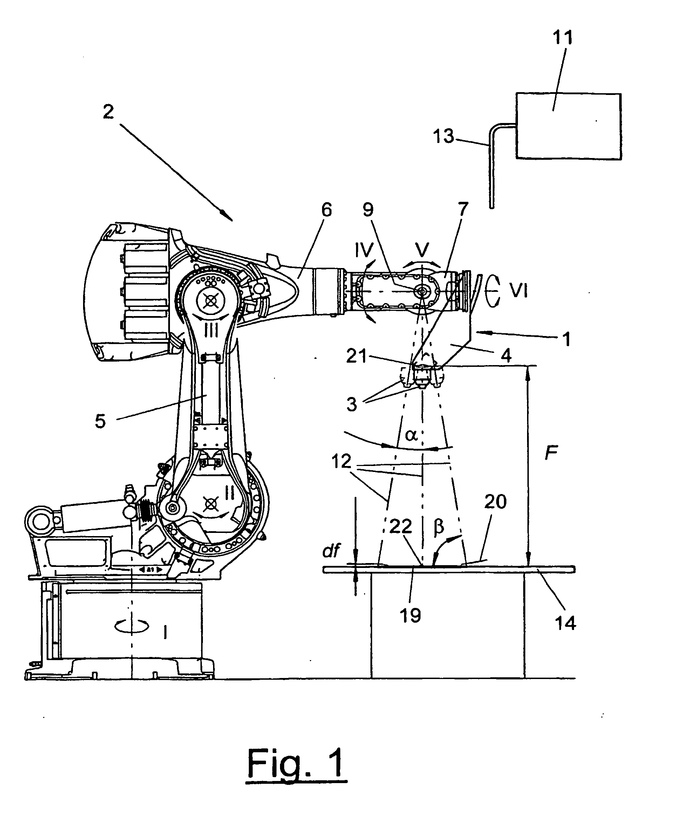

Die in Figur 1 dargestellte Laserschweißvorrichtung (1) besteht aus einem Manipulator (5) mit einer mehrachsigen Manipulatorhand (7) und einem Remote-Laserkopf (3), der einen Laserstrahl (12) emittiert. Die Erfindung befasst sich insofern auch mit dem Betrieb eines solchen Manipulators (5) zur Durchführung eines Laserbearbeitungsverfahrens.

Der Manipulator (5) hält den Laserkopf (3) mit Abstand und ohne Berührungskontakt zum Bauteil (14), welches in Figur 1 in vereinfachter Weise als Blechtafel auf einer Bauteilaufnahme dargestellt ist. Das Bauteil (14) kann ansonsten eine beliebige Form und Größe haben.

Der Manipulator (5) ist im bevorzugten Ausführungsbeispiel als mehrachsiger Industrieroboter, insbesondere als sechsachsiger Gelenkarmroboter ausgebildet. Er besteht aus einem stationären oder ggf. mit einer zusätzlichen Fahrachse ausgerüsteten Sockel, auf dem ein Karussell um eine vertikale Roboterachse I drehbar gelagert ist. Am Karussell ist eine Schwinge um eine zweite horizontale Roboterachse II schwenkbar gelagert. Am anderen Ende trägt die Schwinge einen Roboterarm (6), der um eine dritte horizontale Roboterachse III schwenkbar gelagert ist. Diese Roboterachsen I,II,III bilden die sogenannten Grundachsen.

Die Manipulatorhand oder Roboterhand (7) hat vorzugsweise zumindest zwei, insbesondere drei oder mehr Handachsen IV,V,VI, die sich vorzugsweise alle in einem gemeinsamen Kreuzungspunkt (9) schneiden. Die Roboterhand (7) ist mit ihrem Gehäuse (10) um die erste Handachse IV drehbar am Roboterarm (6) gelagert. Der Abtrieb erfolgt über einen Abtriebsflansch (8) der Roboterhand (7), der um die letzte Handachse VI drehen kann. Der Abtriebsflansch (8) ist seinerseits im Handgehäuse (10) um die quer liegende Handachse V schwenkbar gelagert.

Der Remote-Laserkopf (3) ist vorzugsweise extern am Manipulator (5) angeordnet und direkt oder unter Zwischenschaltung eines Auslegers (4) am Abtriebsflansch (8) befestigt. Der Laserkopf (3) besitzt eine vorzugsweise winkelstarre Fokussieroptik (21) ohne Scannerspiegel oder dgl., die den von einer Laserstrahlquelle (11) zugeführten Laserstrahl mit z.B. konstanter Brennweite F fokussiert und zum Bauteil (14) emittiert. Die Brennweite F beträgt z.B. 500 mm bis 1500 mm, vorzugsweise 1000 mm bis 1500 mm, wobei von diesem Brennweitenbereich je nach Anwendungsfall auch nach oben oder unten abgewichen werden kann.

Die Laser- und Fokussieroptik (21) kann alternativ in der Brennweite veränderlich sein, was z.B. durch einen Optikwechsel, einen drehbaren Revolverkopf mit mehreren Optiken, eine in der Art eines Zoomobjektivs verstellbare Optik, eine anschlussseitige Veränderung der Kollimation oder dgl. erreichbar ist.

Die Laserstrahlquelle (11) kann von beliebiger Art und Größe sein. Im bevorzugten Ausführungsbeispiel handelt es sich um einen Faserlaser oder einen Scheibenlaser mit z.B. externer Laserstrahlquelle (11), die über eine beliebig geeignete Laserstrahlführung (13), z.B. ein flexibles Lichtleitfaserkabel, eine Rohr/Spiegel-Anordnung oder dgl., mit dem Laserkopf (3) verbunden ist. Die Laserstrahlquelle (11) kann einen einzelnen oder mehrere Laserstrahlen (2) emittieren und z.B. als ein in Leistung und Geometrie des Strahlbündels steuerbarer Mehrstrichlaser ausgebildet sein.

Der Laserkopf (3) ist vorzugsweise derart an der Roboterhand (7) befestigt, dass der zum Bauteil (14) emittierte Laserstrahl (12) nicht mit der letzten Handachse VI fluchtet und insbesondere quer dazu ausgerichtet ist. Vorzugsweise befindet sich der Laserkopf (3) in einer vom Abtriebsflansch (8) zurückversetzten Position, in der die Wirkachse des emittierten Laserstrahls (12) den Kreuzungspunkt (9) der Handachsen VI,V,VI schneidet.

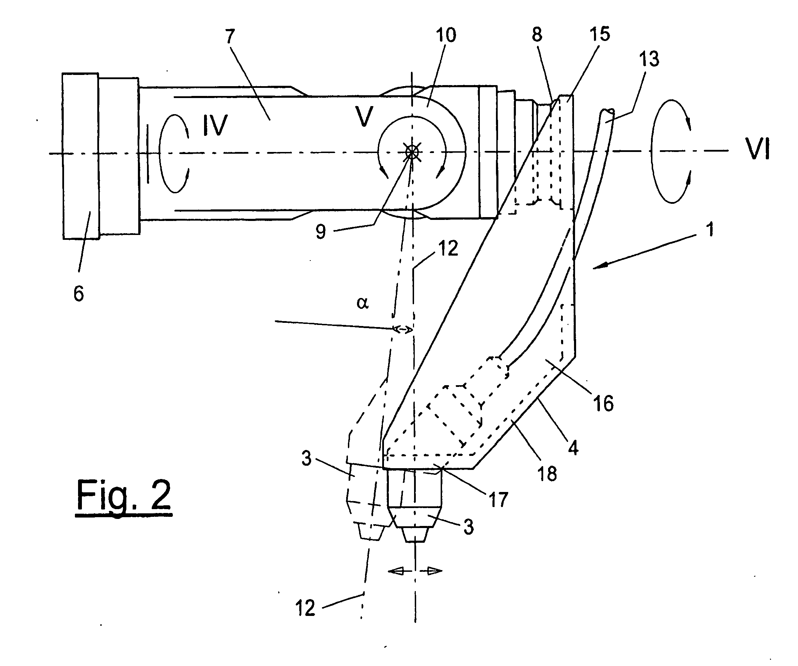

Der Ausleger (4) besitzt eine Montageplatte (15) zur Befestigung am Abtriebsflansch (8). Er hat ferner eine Halterung (17) für den Laserkopf (3), die quer und im rechten Winkel zur Montageplatte (15) ausgerichtet ist. Die Montageplatte (15) und die Halterung (17) befinden sich an den gegenüber liegenden Enden des Auslegers (4) und sind durch mindestens einen distanzierenden Seitenarm (16) miteinander verbunden. Der Seitenarm (16) hat eine entsprechend zugeschnittene Form mit quer zueinander stehenden Endkanten, in deren Bereich die Montageplatte (15) und die Halterung (17) befestigt sind. Figur 2 zeigt diese Ausbildung im Detail.

Der Ausleger (4) ist vorzugsweise als rahmenartiges Gehäuse ausgebildet und besitzt mindestens zwei Seitenarme (16). In der bevorzugten Ausführungsform sind diese Seitenarme parallel zueinander und mit einem solchen Abstand angeordnet, dass sie die Hand (7) und den Laserkopf (3) zumindest bereichsweise seitlich umgeben. Außerdem sind die Seitenarme (16) durch ein oder mehrere quer liegende Zwischenplatten (18) miteinander verbunden. Diese sind in Figur 2 gestrichelt dargestellt. Der Ausleger (4) bzw. der oder die Seitenarme (16) erstrecken sich von der Montageplatte (15) ausgehend schräg nach hinten gegen die letzte Handachse VI. Hierdurch wird der Laserkopf (3) vom Abtriebsflansch (8) in der vorerwähnten Weise nach hinten versetzt angeordnet. Durch diese achssymmetrische Anordnung können die Bewegungen des Laserkopfes (3) über die Handachsenbewegungen unmittelbar und ohne Berücksichtigung von Versatzfehlern gesteuert werden. Die Steuerung der Handachsenbewegungen erfolgt in üblicher Weise durch die Robotersteuerung.

Während des Schweißens wird der emittierte Laserstrahl (12) entlang der zu verfolgenden Schweißbahn (19) durch Orientierungsänderungen geführt, wobei diese Orientierungsänderungen nur durch Schwenkbewegungen der Roboterhand (7) um ein oder mehrere ihrer Handachsen IV, V,VI erzeugt werden. Die Orientierungsänderungen sind Winkeländerungen des Laserstrahls (12) um variable Auslenkwinkel α um die beteiligten Handachse(n) IV,V,VI und insbesondere um den Kreuzungspunkt (9) zwischen Handachsen und Laserstrahl (12). Der Auslenkwinkel α ist z.B. der Schwenkwinkel des Laserstrahls (12) gegenüber der Normalenrichtung auf das Bauteil (14). Der Laserstrahl (12) wird hierbei vorzugsweise ausschließlich durch Drehbewegungen um den Kreuzungspunkt (9) entlang der zu verfolgenden Schweißbahn (19) am Bauteil (14) geführt. Hierbei bewegt sich der Fokus (22) des Laserstrahl (12) auf einer Schalenfläche (20), vorzugsweise einer Kugelschalenfläche um den Kreuzungspunkt (9). Wenn der Laserkopf (3) mit einem seitlichen Versatz zum Kreuzungspunkt (9) angeordnet ist, so dass der nach hinten verlängerte emittierte Laserstrahl (12) den Kreuzungspunkt (9) nicht schneidet, ergibt sich eine andere Schalenbahn (20) für den Fokus (22).

Der Laserkopf (3) selbst hat außer einer evtl. Brennweitenverstellung vorzugsweise keine eigenen mechanischen Zusatzachsen zur Bahn- oder Nahtverfolgung und braucht insoweit nicht angesteuert zu werden.

Durch die Orientierungsänderungen und die variablen Auslenkwinkel α ändern sich auch die Einstrahlwinkel β des Laserstrahls (12) am Bauteil (14). Der für Laserschweißprozesse zulässige Bereich der Einstrahlwinkel kann entsprechend der Lasergestaltung und der Bauteile variieren. Mit dem bisher üblichen Laserschweißtechniken sind die prozesstauglichen Einstrahlwinkel β ca. 60° oder größer.

Durch die schalenförmige Fokusbahn (20) entstehen Höhenabweichungen df zwischen Fokus (22) und Bauteil (14), die mit zunehmendem Auslenkwinkel α ansteigen. Bei längeren Brennweiten F, insbesondere im bevorzugten Bereich zwischen 1000 mm und 1500 mm, sind diese Höhenabweichungen df tolerabel und brauchen in vielen Fällen nicht kompensiert zu werden. In anderen Fällen kann zur Kompensation eine Fokusnachführung stattfinden. Dies ist auf verschiedene Weise möglich, z.B. durch eine im Laserkopf (3) integrierte Linearachse, mit der die Fokussieroptik (21) in Strahlrichtung vor- und zurückbewegt werden kann. Eine andere Möglichkeit der internen Fokusnachführung besteht in einer speziellen adaptiven Fokussieroptik (21) mit veränderlicher Brennweite. Ferner ist es möglich, die Höhenabweichung df durch eine Nachführbewegung des Roboters (5) über die Grundachsen I,II,III durchzuführen. Die für die Einstellung der Fokusnachführung erforderlichen Einstellwerte können auf beliebig geeignete Weise gewonnen werden, z.B. durch eine Abstandsmessung vom Laserkopf (3) zum Bauteil (14) oder durch eine Messung des Auslenkwinkels α und eine Rückrechnung auf die hieraus sich ergebende Höhenabweichung df.

Beim Schweißen ist der Manipulator oder Roboter (5) vorzugsweise mit seinen Grundachsen I,II,III in Ruhe und positioniert lediglich die Roboterhand (7) an der gewünschten Stelle im Raum mit Abstand zum Bauteil (14).

Die Laserstrahlbewegung wird dann nur durch die Dreh- oder Schwenkbewegung von ein oder mehreren Handachsen IV,V,VI ausgeführt. Eine Versatzbewegung des Roboters (5) und der Roboterhand (7) findet nicht statt. Allerdings kann über die Grundachsen I,II,III in der vorerwähnten Weise eine Fokusnachführung erfolgen.

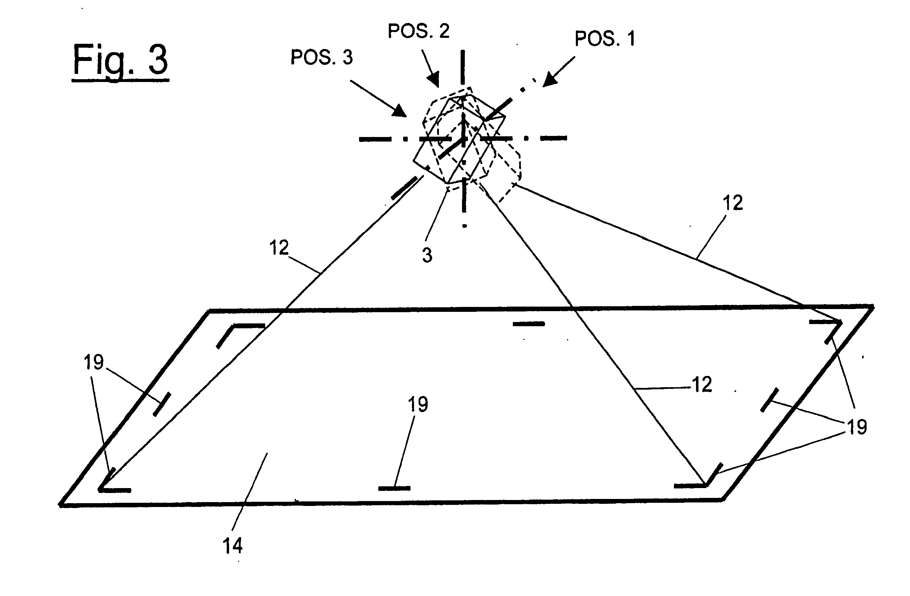

Mit der beschriebenen Verfahrenstechnik können unterschiedliche Arten von Schweißnähten (19) am Bauteil (14) geschweißt werden. Figur 3 zeigt hierfür ein Ausführungsbeispiel mit mehreren Strichnähten, die z.T. im Wesentlichen gerade ausgebildet und zum anderen Teil deutlich gekrümmt und insbesondere abgewinkelt sind. Figur 3 zeigt hierbei auch die unterschiedlichen Winkelstellungen bzw. Positionen 1 - 3 des Remote-Laserkopfes (3), aus denen der Laserstrahl (12) an die gewünschten Stellen am Bauteil (14) gerichtet wird.

Wenn die Brennweite F und/oder die Auslegerlänge sowie der hieraus sich ergebende Arbeitsbereich genügend groß sind, kann aus einer Raumposition der Roboterhand (7) das gesamte Bauteil (14) durch reine Handachsenbewegungen geschweißt werden. Wie in Figur 3 findet hierbei auch die Versatzbewegung des Laserstrahls (12) durch eine reine handachsengesteuerte Drehbewegung des Laserkopfs (3) statt. Alternativ kann die Versatzbewegung zwischen den einzelnen Schweißnähten (19) oder Nahtabschnitten durch eine Umpositionierung der Roboterhand (7) durch den Manipulator (5) erfolgen. Ferner ist es in kinematischer Umkehr möglich, das Bauteil (14) bei der Versatzbewegung relativ zum Laserkopf (3) zu bewegen. Während der Versatzbewegungen findet kein Schweißen statt.

Beim Schweißprozess kann die Leistung der Laserstrahlquelle (11) in Abhängigkeit von den Orientierungsänderungen bzw. den veränderlichen Einstrahlwinkeln β des Laserstrahls (12) nachgeführt werden. Eine Leistungsnachführung kann außerdem zum Einstechen am Nahtanfang und zum Ausfahren am Nahtende stattfinden. Durch die winkelabhängige Leistungsnachführung können Leistungseinbußen an der Nahtstelle kompensiert werden, die z.B. durch ungünstige flachere Einstrahlwinkel β entstehen können. Beim rechten Einstrahlwinkel β zwischen Laserstrahl (12) und Bauteil (14) an der Auftreffstelle ist die übertragbare Strahleistung maximal, so dass hier die Laserleistung entsprechend verringert werden kann. Alternativ zur Leistungsanpassung kann die Schweißgeschwindigkeit verändert werden, um die gewünschte Streckenenergie zu erreichen.

Abwandlungen der gezeigten Ausführungsform sind in verschiedener Weise möglich. Dies betrifft einerseits die Gestaltung des Manipulators (5). Dieser kann in beliebig anderer Weise ausgebildet sein und eine andere Zahl, Art, Anordnung und/oder Kombination von Manipulator-Grundachsen I,II,III besitzen. Er kann insbesondere wahlweise translatorische oder rotatorische Achsen oder eine beliebige Kombination dieser Achsarten haben. Der Manipulator kann z.B. als Portalroboter mit drei translatorischen Fahrachsen (z.B. Kreuzschlitten mit Hubeinheit) ausgebildet sein. Der Manipulator (5) kann bei ausreichend großem Arbeitsbereich der Laserschweißvorrichtung (1) auch ein stationäres Gestell oder dgl. sein. Der Manipulator (5) kann ferner beliebig angeordnet sein, z.B. stehend am Boden oder hängend an einem Portal oder an einer Wand. Ferner sind andere Arten und Kinematiken der Manipulatorhand (7) und ihrer Handachsen möglich. Auf den Ausleger (4) kann zu Gunsten einer direkten Montage des Remote-Laserkopfes (3) am Abtriebsflansch (8) verzichtet werden. Der sich hieraus ergebende Offset zum Kreuzungspunkt (9) wird in der Handachsensteuerung entsprechend ausgeglichen und kann für gewisse Anwendungsfälle auch von Vorteil sein, insbesondere wenn räumlich um Kanten am Bauteil herum geschweißt werden soll.

Variabel ist ferner die Laserkonstruktion an sich. Dies betrifft einerseits die Gestaltung des Remote-Laserkopfes (3) und seiner Fokussiereinrichtung (21). Andererseits kann die Laserstrahlquelle (11) in den Laserkopf (3) integriert oder an anderer Stelle, z.B. am Roboterarm (6) angeordnet werden. Sie kann ferner als Diodenlaser, CO2-Laser oder in beliebig anderer Art ausgeführt sein. Auch die Art der Laserstrahlführung (13) ist variabel. Sie kann z.B. als offene oder geschlossene Spiegelführung mit beweglichen Rohrabschnitten ausgebildet sein. Ferner ist es möglich, die beschriebene Technik für andere Laserbearbeitungsverfahren, z.B. das Laserschneiden, die Oberflächenbearbeitung mit Laser etc., anzuwenden.

### BEZUGSZEICHENLISTE

- 1: Laserschweißvorrichtung
- 2: Laserschweißstation
- 3: Laserkopf, Remote-Laserkopf
- 4: Ausleger
- 5: Manipulator, Roboter
- 6: Roboterarm
- 7: Hand, Roboterhand
- 8: Abtriebsflansch
- 9: Kreuzungspunkt Handachsen
- 10: Handgehäuse
- 11: Laserstrahlquelle
- 12: Laserstrahl, Wirkachse
- 13: Laserstrahlführung, Lichtleitfaserkabel
- 14: Bauteil
- 15: Montageplatte
- 16: Seitenarm
- 17: Halterung
- 18: Zwischenplatte
- 19: Schweißnaht, Schweißbahn, Nahtabschnitt
- 20: Fokusbahn
- 21: Fokussieroptik
- 22: Fokus Laserstrahl

- I: Roboterachse, Drehachse
- II: Roboterachse, Schwenkachse
- III: Roboterachse, Schwenkachse
- IV: Handachse, Drehachse
- V: Handachse, Schwenkachse
- VI: Handachse, Drehachse
- F: Brennweite Laser
- α: Auslenkwinkel, Orientierungsänderung Laserstrahl
- β: Einstrahlwinkel
- *df*: Höhenabweichung Fokus zu Bauteil

## Patentansprüche

1. Verfahren zum Laserstrahlbearbeiten, insbesondere Laserstrahlschweißen von Bauteilen (14), insbesondere Karosseriebauteilen, mit einem Remote-Laserkopf (3), der von einem Manipulator (5) mit einer mehrachsigen Manipulatorhand (7) geführt wird, wobei während des Laserstrahlbearbeitens der emittierte Laserstrahl (12) entlang der zu verfolgenden Bearbeitungsbahn (19) durch Orientierungsänderungen und mit veränderlichen Einstrahlwinkeln β geführt wird, **dadurch gekennzeichnet, dass** während des Laserbearbeitens der emittierte Laserstrahl entlang der zu verfolgenden Bearbeitungsbahn durch eine reine Handachsenbewegung geführt wird, wobei seine Orientierungsänderungen nur durch Schwenkbewegungen der Manipulatorhand (7) um mindestens eine ihrer Handachsen IV,V,VI erzeugt werden.

2. Verfahren nach Anspruch 1, **dadurch gekennzeichnet, dass** der zum Bauteil (14) emittierte Laserstrahl (12) nicht mit der letzten Handachse VI fluchtet.

3. Verfahren nach Anspruch 1 oder 2, **dadurch gekennzeichnet, dass** der Manipulator (5) beim Laserstrahlbearbeiten mit seinen anderen Achsen I,II,III in Ruhe ist.

4. Verfahren nach Anspruch 1, 2 oder 3, **dadurch gekennzeichnet, dass** der Fokus (22) des Laserstrahls (12) beim Laserstrahlbearbeiten auf einer Kugelbahn (20) um den Kreuzungspunkt (9) der Handachsen IV,V,VI bewegt wird.

5. Verfahren nach einem der vorhergehenden Ansprüche, **dadurch gekennzeichnet, dass** beim Laserstrahlbearbeiten der Fokus (22) des Laserstrahls (12) in Strahlrichtung nachgeführt wird.

6. Verfahren nach einem der vorhergehenden Ansprüche, **dadurch gekennzeichnet, dass** der Laserstrahl (12) von einem extern an der Manipulatorhand (7) angeordneten Remote-Laserkopf (3) emittiert wird.

7. Verfahren nach einem der vorhergehenden Ansprüche, **dadurch gekennzeichnet, dass** der Remote-Laserkopf (3) mittels eines Auslegers (4) mit Abstand zur Manipulatorhand (7) geführt wird.

8. Verfahren nach einem der vorhergehenden Ansprüche, **dadurch gekennzeichnet, dass** der Remote-Laserkopf (3) mit einer Ausrichtung des emittierten Laserstrahls (12) quer zur letzten Handachse VI gehalten wird.

9. Verfahren nach einem der vorhergehenden Ansprüche, **dadurch gekennzeichnet, dass** der Remote-Laserkopf (3) derart an der Manipulatorhand (7) befestigt wird, dass der emittierte Laserstrahl (12) den Kreuzungspunkt (9) der Handachsen IV,V,VI schneidet.

10. Verfahren nach einem der vorhergehenden Ansprüche, **dadurch gekennzeichnet, dass** ein Remote-Laserkopf (3) mit winkelstarrer Fokussieroptik (21) verwendet wird.

11. Verfahren nach einem der vorhergehenden Ansprüche, **dadurch gekennzeichnet, dass** ein Remote-Laserkopf (3) mit einer festen Brennweite von vorzugsweise 500 bis 1500 mm verwendet wird.

12. Verfahren nach einem der vorhergehenden Ansprüche, **dadurch gekennzeichnet, dass** beim Laserstrahlbearbeiten die Laserleistung in Abhängigkeit von den Orientierungsänderungen des Laserstrahls (12) nachgeführt wird.

13. Verfahren nach einem der vorhergehenden Ansprüche, **dadurch gekennzeichnet, dass** beim Laserstrahlbearbeiten die Schweißgeschwindigkeit in Abhängigkeit von den Einstrahlwinkeln β des Laserstrahls (12) nachgeführt wird.

14. Vorrichtung zum Laserstrahlbearbeiten, insbesondere Laserstrahlschweißen von Bauteilen (14), insbesondere Karosseriebauteilen, mit einem Manipulator (5), der eine Robotersteuerung und eine mehrachsige Manipulatorhand (7) mit einem Remote-Laserkopf (3) aufweist, wobei der Manipulator (5) derart gesteuert ist, dass während des Laserstrahlbearbeitens der emittierte Laserstrahl (12) entlang der zu verfolgenden Bearbeitungsbahn (19) durch Orientierungsänderungen und mit veränderlichen Einstrahlwinkeln β geführt wird, **dadurch gekennzeichnet, dass** der Manipulator derart gesteuert wird, dass während des Laserbearbeitens der emittierte Laserstrahl entlang der zu verfolgenden Bearbeitungsbahn durch eine reine Handachsenbewegung geführt wird wobei seine Orientierungsänderungen nur durch Schwenkbewegungen der Manipulatorhand (7) um mindestens eine ihrer Handachsen IV,V,VI erzeugbar sind.

15. Vorrichtung nach Anspruch 14, **dadurch gekennzeichnet, dass** die Manipulatorhand (7) zwei oder drei Handachsen IV,V,VI aufweist.

16. Vorrichtung nach Anspruch 14 oder 15, **dadurch gekennzeichnet, dass** der Remote-Laserkopf (3) mittels eines Auslegers (4) mit Abstand zur Manipulatorhand (7) angeordnet ist.

17. Vorrichtung nach Anspruch 14, 15 oder 16, **dadurch gekennzeichnet, dass** der Remote-Laserkopf (3) mit einer Ausrichtung des emittierten Laserstrahls (12) quer zur letzten Handachse VI angeordnet ist.

18. Vorrichtung nach einem der Ansprüche 14 bis 17, **dadurch gekennzeichnet, dass** der Remote-Laserkopf (3) derart an der Manipulatorhand (7) befestigt wird, dass der emittierte Laserstrahl (12) den Kreuzungspunkt (9) der Handachsen IV,V,VI schneidet.

19. Vorrichtung nach einem der Ansprüche 14 bis 18, **dadurch gekennzeichnet, dass** der Remote-Laserkopf (3) eine winkelstarre Fokussieroptik (21) aufweist.

20. Vorrichtung nach einem der Ansprüche 14 bis 19, **dadurch gekennzeichnet, dass** der Remote-Laserkopf (3) eine feste Brennweite von vorzugsweise 500 bis 1500 mm aufweist.

21. Vorrichtung nach einem der Ansprüche 14 bis 17, **dadurch gekennzeichnet, dass** die Laserquelle (11) eine veränderliche Laserleistung aufweist, die beim Laserstrahlbearbeiten in Abhängigkeit von den Orientierungsänderungen des Laserstrahls (12) nachführbar ist.

22. Vorrichtung nach einem der Ansprüche 14 bis 17, **dadurch gekennzeichnet, dass** der Manipulator (5) derart gesteuert ist, dass beim Laserstrahlbearbeiten die Schweißgeschwindigkeit in Abhängigkeit von den Einstrahlwinkeln β des Laserstrahls (12) nachführbar ist.

## Claims

1. Method for laser beam machining, in particular laser beam welding, components (14), in particular vehicle body components, having a remote laser head (3) which is guided with a multi-axis manipulator hand (7) by a manipulator (5), wherein during the laser beam machining the emitted laser beam (12) is guided along the machining path (19) to be followed by changes in orientation and with variable angles β of instance, **characterized in that** during the laser machining the emitted laser beam is guided along the machining path to be followed by a pure hand axis movement, wherein its changes in orientation are generated only by pivoting movements of the manipulator hand (7) about at least one of its hand axes IV, V, VI.

2. Method according to Claim 1, **characterized in that** the laser beam (12) which is emitted towards the component (14) is no longer aligned with the last hand axis VI.

3. Method according to Claim 1 or 2, **characterized in that** the manipulator (5) is at rest during the laser beam machining with its other axes I, II, III.

4. Method according to Claim 1, 2 or 3, **characterized in that** during the laser beam machining the focus (22) of the laser beam (12) is moved about the intersection point (9) of the hand axes IV, V, VI on a raceway (20).

5. Method according to one of the preceding claims, **characterized in that** during the laser beam machining the focus (22) of the laser beam (12) is tracked in the direction of the beam.

6. Method according to one of the preceding claims, **characterized in that** the laser beam (12) is emitted by a remote laser head (3) which is arranged externally on the manipulator hand (7).

7. Method according to one of the preceding claims, **characterized in that** the remote laser head (3) is guided at a distance from the manipulator hand (7) by means of an extension arm (4).

8. Method according to one of the preceding claims, **characterized in that** the remote laser head (3) is held with an orientation of the emitted laser beam (12) in the transverse direction with respect to the last hand axis VI.

9. Method according to one of the preceding claims, **characterized in that** the remote laser head (3) is attached to the manipulator hand (7) in such a way that the emitted laser beam (12) intersects the intersection point (9) of the hand axes IV, V, VI.

10. Method according to one of the preceding claims, **characterized in that** a remote laser head (3) is used with focusing optics (21) with rigid angles.

11. Method according to one of the preceding claims, **characterized in that** a remote laser head (3) is used with a fixed focal length of preferably 500 to 1500 mm.

12. Method according to one of the preceding claims, **characterized in that** during the laser beam machining the laser power is adjusted as a function of the changes in orientation of the laser beam (12).

13. Method according to one of the preceding claims, **characterized in that** during the laser beam machining the welding speed is adjusted as a function of the angles β of incidence of the laser beam (12).

14. Device for laser beam machining, in particular laser beam welding, components (14), in particular vehicle body components, having a manipulator (5) which has a robot controller and a multi-axis manipulator hand (7) with a remote laser head (3), wherein the manipulator (5) is controlled in such a way that during the laser beam machining the emitted laser beam (12) is guided along the machining path (19) to be followed by changes in orientation and with variable angles β of incidence, **characterized in that** the manipulator is controlled in such a way that during the laser machining the emitted laser beam is guided along the machining path to be followed by a pure hand axis movement, wherein its changes in orientation can be generated only by pivoting movements of the manipulator hand (7) about at least one of its hand axes IV, V, VI.

15. Device according to Claim 14, **characterized in that** the manipulator hand (7) has two or three hand axes IV, V, VI.

16. Device according to Claim 14 or 15, **characterized in that** the remote laser head (3) is arranged at a distance from the manipulator hand (7) by means of an extension arm (4).

17. Device according to Claim 14, 15 or 16, **characterized in that** the remote laser head (3) is arranged with an orientation of the emitted laser beam (12) in the transverse direction with respect to the last hand axis VI.

18. Device according to one of Claims 14 to 17, **characterized in that** the remote laser head (3) is attached to the manipulator hand (7) in such a way that the emitted laser beam (12) intersects the intersection point (9) of the hand axes IV, V, VI.

19. Device according to one of Claims 14 to 18, **characterized in that** the remote laser head (3) has focusing optics (21) with rigid angles.

20. Device according to one of Claims 14 to 19, **characterized in that** the remote laser head (3) has a fixed focal length of preferably 500 to 1500 mm.

21. Device according to one of Claims 14 to 17, **characterized in that** the laser source (11) has a variable laser power which, during laser beam machining, can be adjusted as a function of the changes in orientation of the laser beam (12).

22. Device according to one of Claims 14 to 17, **characterized in that** the manipulator (5) is controlled in such a way that during the laser beam machining the welding speed can be adjusted as a function of the angles β of incidence of the laser beam (12).

## Revendications

1. Procédé d'usinage au laser, notamment de soudage au laser, de composants (14), notamment de composants de carrosserie, avec une tête de laser à distance (3) guidée par un manipulateur (5) doté d'une main de manipulateur (7) pluriaxiale ;
le rayon laser émis (12) étant guidé pendant l'usinage au laser le long du couloir d'usinage (19) à suivre par le biais de changements d'orientation et avec des angles de rayonnement entrant β variables ;
**caractérisé en ce que** pendant le travail du laser, le rayon laser émis est guidé le long du couloir d'usinage à suivre par un seul mouvement d'axe de main, ses changements d'orientation ne se produisant que par des mouvements de pivotement de la main de manipulateur (7) autour d'au moins un de ses axes de main IV, V, VI.

2. Procédé selon la revendication 1, **caractérisé en ce que** le rayon laser émis (12) en direction du composant (14) n'est pas aligné avec le dernier axe de main VI.

3. Procédé selon la revendication 1 ou 2, **caractérisé en ce que** le manipulateur (5) est au repos lors de l'usinage au laser avec ses autres axes I, II, III.

4. Procédé selon la revendication 1, 2 ou 3, **caractérisé en ce que** le foyer (22) du rayon laser (12) se déplace, lors de l'usinage au laser, sur un couloir sphérique (20) entourant le point d'intersection (9) des axes de main IV, V, VI.

5. Procédé selon l'une quelconque des revendications précédentes, **caractérisé en ce que** lors de l'usinage au laser, le foyer (22) du rayon laser (12) est asservi en direction du rayon.

6. Procédé selon l'une quelconque des revendications précédentes, **caractérisé en ce que** le rayon laser (12) est émis par une tête de laser à distance (3) disposée à l'extérieur au niveau de la main de manipulateur (7).

7. Procédé selon l'une quelconque des revendications précédentes, **caractérisé en ce que** la tête de laser à distance (3) est guidée à l'aide d'une potence (4) placée à une certaine distance de la main de manipulateur (7).

8. Procédé selon l'une quelconque des revendications précédentes, **caractérisé en ce que** la tête de laser à distance (3) est maintenue transversalement au dernier axe de main VI par le biais d'une certaine orientation du rayon laser (12) émis.

9. Procédé selon l'une quelconque des revendications précédentes, **caractérisé en ce que** la tête de laser à distance (3) est fixée de telle sorte à la main de manipulateur (7) que le rayon laser émis (12) passe par le point d'intersection (9) des axes de main IV, V, VI.

10. Procédé selon l'une quelconque des revendications précédentes, **caractérisé en ce qu'**une tête de laser à distance (3) est utilisée avec un système optique de focalisation (21) à angle fixe.

11. Procédé selon l'une quelconque des revendications précédentes, **caractérisé en ce qu'**une tête de laser à distance (3) est utilisée avec une distance focale fixe allant de préférence de 500 à 1500 mm.

12. Procédé selon l'une quelconque des revendications précédentes, **caractérisé en ce que** la puissance du laser est asservie lors de l'usinage au laser en fonction des changements d'orientation du rayon laser (12).

13. Procédé selon l'une quelconque des revendications précédentes, **caractérisé en ce que** la vitesse de soudure est asservie lors de l'usinage au laser en fonction des angles de rayonnement entrant β variables du rayon laser (12).

14. Dispositif d'usinage au laser, notamment de soudage au laser, de composants (14), notamment de composants de carrosserie, avec un manipulateur (5) comportant une commande de robot et une main de manipulateur (7) pluriaxiale dotée d'une tête de laser à distance (3), le manipulateur (5) étant commandé de telle sorte que pendant l'usinage au laser, le rayon laser émis (12) est guidé le long du couloir d'usinage (19) à suivre par le biais de changements d'orientation et avec des angles de rayonnement entrant β variables, **caractérisé en ce que** le manipulateur est commandé de telle sorte que pendant le travail du laser, le rayon laser émis est guidé le long du couloir d'usinage à suivre par un seul mouvement d'axe de main, ses changements d'orientation ne pouvant être réalisés que par des mouvements de pivotement de la main de manipulateur (7) autour d'au moins un de ses axes de main IV, V, VI.

15. Dispositif selon la revendication 14, **caractérisé en ce que** la main de manipulateur (7) comporte deux ou trois axes de main IV, V, VI.

16. Dispositif selon la revendication 14 ou 15, **caractérisé en ce que** la tête de laser à distance (3) est disposée à l'aide d'une potence (4) placée à une certaine distance de la main de manipulateur (7).

17. Dispositif selon la revendication 14, 15 ou 16, **caractérisé en ce que** la tête de laser à distance (3) est disposée transversalement au dernier axe de main VI par le biais d'une certaine orientation du rayon laser (12) émis.

18. Dispositif selon l'une quelconque des revendications 14 à 17, **caractérisé en ce que** la tête de laser à distance (3) est fixée de telle sorte à la main de manipulateur (7) que le rayon laser émis (12) passe par le point d'intersection (9) des axes de main IV, V, VI.

19. Dispositif selon l'une quelconque des revendications 14 à 18, **caractérisé en ce que** la tête de laser à distance (3) comporte un système optique de focalisation (21) à angle fixe.

20. Dispositif selon l'une quelconque des revendications 14 à 19, **caractérisé en ce que** la tête de laser à distance (3) comporte une distance focale fixe allant de préférence de 500 à 1500 mm.

21. Dispositif selon l'une quelconque des revendications 14 à 17, **caractérisé en ce que** la source de laser (11) comporte une puissance de laser variable pouvant être asservie lors de l'usinage au laser en fonction des changements d'orientation du rayon laser (12).

22. Dispositif selon l'une quelconque des revendications 14 à 17, **caractérisé en ce que** le manipulateur (5) est commandé de telle sorte que la vitesse de soudure peut être asservie lors de l'usinage au laser en fonction des angles de rayonnement entrant β variables du rayon laser (12).
